# EUROPEAN PATENT SPECIFICATION

(11) **EP 4 349 700 B1**
(45) Date of publication and mention of the grant of the patent: **30.04.2025**
(21) Application number: 23201724.4
(22) Date of filing: 05.10.2023
(51) Int. Cl.: B62M 25/08, B62K 11/04, B62M 7/02, B62J 11/19, F16H 61/00

(54) **STRADDLED VEHICLE**
GRÄTSCHSITZFAHRZEUG
VÉHICULE À SELLE

(30) Priority: 05.10.2022 JP 2022160676; 02.06.2023 JP 2023091610
(43) Date of publication of application: 10.04.2024
(73) Proprietor: Yamaha Hatsudoki Kabushiki Kaisha, Iwata-shi, Shizuoka 438-8501 (JP)
(72) Inventor: OISHI, Nobuaki, Iwata-shi, Shizuoka, 438-8501 (JP)
(74) Representative: Stöckeler, Ferdinand

(56) References cited:
- JP-A- 2015 077 887
- JP-B2- 4 936 805
- US-A- 6 131 682
- US-A1- 2011 073 433

## Description

### Technical Field

The present invention relates to a straddled vehicle.

### Background Art

Known as a straddled vehicle as typified by a motorcycle is a straddled vehicle equipped with a motor control unit for controlling various motors. A straddled vehicle equipped with a motor control unit is disclosed in Patent Literature 1 (hereinafter, referred to as PTL 1), for example. In the straddled vehicle according to PTL 1, the motor control unit electronically controls a transmission. To be specific, the motor control unit receives a shift detection signal, which is sent in response to a manipulation on a shift lever. The motor control unit controls a clutch actuator and a shift actuator based on the received shift detection signal, to change the gear of the transmission.

JP 2015 077887 A is considered the closest prior of claim 1 and discloses the following features of claim 1; a straddled vehicle comprising:a vehicle body including a head tube and a frame, the frame extending backward from the head tube in a top view, the frame being disposed so as to be shifted in the left-right direction from a left-right center line, the left-right center line extending in the forward-backward direction while passing through the head tube;a front fork supported by the head tube;a multi-stage transmission including plural gears;an actuator mechanism for changing a gear of the multi-stage transmission, the actuator mechanism including a clutch motor and/or a shift motor, the clutch motor being disposed further in the backward direction than the head tube, the shift motor being disposed further in the backward direction than the head tube;a motor control unit configured to control the clutch motor and/or the shift motor;an electric cable connecting the motor control unit to the clutch motor and/or the shift motor; anda main harness bundling an intermediate section of the electric cable together with another electric cable,the motor control unit being attached to the frame, which holds the main harness, andat least a part of the motor control unit is positioned further in the backward direction than the front fork.

### Citation List

### Patent Literature

PTL 1: Japanese Patent Application Laid-Open No.2015-077887

### Summary of Invention

### Technical Problem

A motor control unit, which includes electronic parts, is desirably disposed in a place that is less likely to receive a thermal influence. For example, it is desirable to avoid arranging the motor control unit in a place such as an immediate vicinity of an engine. In the straddled vehicle according to PTL 1, the motor control unit is disposed under a seat, and is distant from an engine, which is disposed more forward than the seat. Therefore, the motor control unit is less likely to receive a thermal influence.

Here, the transmission is disposed adjacent to the engine, and therefore the clutch actuator and the shift actuator are inevitably disposed near the engine. If the motor control unit is disposed far from the engine and the transmission, an electric cable that connects the motor control unit to the clutch actuator and the shift actuator has to be long. The longer the electric cable is, the higher the cost and weight are.

In a straddled vehicle, a region under a seat is used as a space for accommodating miscellaneous articles, or used as a space where onboard equipment (such as onboard equipment for an ETC system) to be manipulated by a user is disposed. Thus, it is desirable that as wide a space as possible is provided under the seat.

The present invention aims to provide a straddled vehicle that can have a motor control unit with precautions against heat, the straddled vehicle being capable of shortening an electric cable connected to the motor control unit while achieving effective use of a space.

### Solution to Problem

The inventor of the present invention examined precautions against heat of a motor control unit. The inventor of the present invention considered that if the motor control unit can be cooled appropriately, it is not necessary to arrange the motor control unit sufficiently far from an engine, unlike the straddled vehicle of PTL 1 for example. Use of a running airflow is one conceivable means for cooling the motor control unit. In order that the motor control unit can receive a running airflow, the motor control unit needs to be disposed in a front portion of a straddled vehicle. In the front portion of the straddled vehicle, however, a headlight, a front cover, a front fork, and the like are arranged in and around the center with respect to the vehicle width direction. If the motor control unit is disposed right behind these parts, a running airflow is less likely to hit the motor control unit.

The inventor of the present invention conducted studies about shortening of an electric cable that is connected to the motor control unit. The motor control unit is connected to a clutch motor and/or a shift motor by the electric cable. The motor control unit controls the clutch motor and the like based on an input from a shift operator, for example. The length of the electric cable depends on the distance between the motor control unit and a connection destination of the motor control unit.

In addition, the electric cable connected to the motor control unit is bundled into a main harness for the purpose of improving the ease of assembly. The electric cable, which is bundled in the main harness, branches from the main harness at a location near the motor control unit, and is connected to the motor control unit. In general, the main harness is fixed to a frame. The frame supports a member that is disposed at the center with respect to the vehicle width direction, examples of the member including an engine, a fuel tank, and the like. In many cases, therefore, the frame is divided to the left and right from a head tube before extending to the back. The main harness is fixed to this frame, and consequently is arranged at a position shifted to the left or right with respect to the vehicle width direction. If the motor control unit is disposed at the center with respect to the vehicle width direction, the distance between the main harness and the motor control unit is large, which results in a long interval from a portion of the electric cable branching from the main harness to the motor control unit.

The inventor of the present invention contemplated effective use of a space. In a straddled vehicle, a crankshaft and a transmission are generally accommodated in a crank case. Examples of the transmission mounted to the straddled vehicle include a multi-stage transmission and a continuously variable transmission. The multi-stage transmission is more complicated in structure than the continuously variable transmission. Therefore, it is likely that a straddled vehicle including a multi-stage transmission has a crank case larger than that of a straddled vehicle including a continuously variable transmission. Disposed on the crank case are, for example, a starter motor, a chain tensioner, a thermostat of a cooling system, a throttle valve, and the like. Thus, in the straddled vehicle, various components are disposed in spite of a narrow vehicle width, which results in a limited baggage accommodation space. This is conspicuous especially in a straddled vehicle including a multi-stage transmission.

As described above, the inventor of the present invention examined arrangement of the motor control unit that can achieve all of the precautions against heat, the shortening of the electric cable connected to the motor control unit, and the effective use of a space. As a consequence, the inventor of the present invention conceived of the invention of the present application, which will be described below.
(1) A straddled vehicle of the present invention includes a vehicle body including a head tube and a frame, the frame extending backward from the head tube in a top view, the frame being disposed so as to be shifted in the left-right direction from a left-right center line, the left-right center line extending in the forward-backward direction while passing through the head tube; a front fork supported by the head tube; a multi-stage transmission including plural gears; an actuator mechanism for changing a gear of the multi-stage transmission, the actuator mechanism including a clutch motor and/or a shift motor, the clutch motor being disposed further in the backward direction than the head tube, the shift motor being disposed further in the backward direction than the head tube; a motor control unit for controlling the clutch motor and/or the shift motor; an electric cable connecting the motor control unit to the clutch motor and/or the shift motor; and a main harness bundling an intermediate section of the electric cable together with another electric cable. The motor control unit is attached to the frame, which holds the main harness, such that: a distance in the left-right direction from the left-right center line to the motor control unit is longer than a distance in the left-right direction from the left-right center line to a motor control unit branch portion, the motor control unit branch portion being a portion where an end portion of the electric cable connected to the motor control unit branches from the main harness; and at least a part of the motor control unit is positioned further in the backward direction than the front fork and further in the forward direction than the clutch motor and/or the shift motor.

In the foregoing straddled vehicle, the motor control unit is shifted to the left or right relative to the center in the left-right direction, and is disposed further in an outward direction in the left-right direction than the motor control unit branch portion where the electric cable branches from the main harness. Examples of such a configuration include a configuration in which the main harness is attached inward of the frame while the motor control unit is attached outward of the frame. This configuration makes the motor control unit likely to receive a running airflow.

The motor control unit is attached to the frame, which holds the main harness, and is disposed at a position close to the main harness. The motor control unit is disposed between the front fork and the clutch motor (and/or the shift motor) in the forward-backward direction. Therefore, for example, providing the shift operator connected to the motor control unit to a steering handle shortens both the distance in the forward-backward direction between the motor control unit and the shift operator, which is a connection destination of the motor control unit, and the distance in the forward-backward direction between the motor control unit and the clutch motor (and/or the shift motor), which is a connection destination of the motor control unit. Such a configuration shortens the length of the electric cable connected to the motor control unit.

Furthermore, in the foregoing configuration, the motor control unit is not disposed in, for example, a space under a seat, or the like. This can minimize an influence that the motor control unit has on the size of an accommodation space.

Accordingly, the foregoing straddled vehicle can have the motor control unit with precautions against heat, and can shorten the electric cable connected to the motor control unit while achieving effective use of a space.

(2) The straddled vehicle according to (1) above may further include a steering handle supported by the head tube, and a shift operator capable of changing a gear of the multi-stage transmission, the shift operator being provided to the steering handle. The motor control unit may be attached to the frame, which holds the main harness, such that at least a part of the motor control unit is positioned further in a downward direction than the shift operator and further in an upward direction than the clutch motor and/or the shift motor.

In the straddled vehicle according to (2) above, the motor control unit is disposed between the shift operator and the clutch motor (and/or the shift motor) in an up-down direction. This shortens both the distance in the up-down direction between the motor control unit and the shift operator, which is a connection destination of the motor control unit, and the distance in the up-down direction between the motor control unit and the clutch motor (and/or the shift motor), which is a connection destination of the motor control unit. Thus, not only the length of the electric cable in the forward-backward direction but also the length thereof in the up-down direction is shortened. Accordingly, this straddled vehicle can have the motor control unit with precautions against heat, and can further shorten the electric cable connected to the motor control unit while achieving effective use of a space.

(3) The straddled vehicle according to (1) or (2) above may include two front forks supported by the head tube, the two front forks being disposed to the left and right relative to the left-right center line. The motor control unit may be attached to the frame, which holds the main harness, such that at least a part of the motor control unit is positioned further in the outward direction than an outer edge of either one of the two front forks in the left-right direction while the straddled vehicle is in an upright and non-steered state.

In the straddled vehicle according to (3) above, at least a part of the motor control unit is positioned further in a leftward direction than a left front fork or further in a rightward direction than a right front fork. This makes the motor control unit likely to receive a running airflow. Accordingly, this straddled vehicle can have the motor control unit with further improved precautions against heat, and also can shorten the electric cable connected to the motor control unit while achieving effective use of a space.

(4) The straddled vehicle according to any of (1) to (3) above may further include a seat on which a driver of the straddled vehicle sits, the seat being attached to the vehicle body. The motor control unit may be attached to the frame, which holds the main harness, such that at least a part of the motor control unit is positioned further in the backward direction than the front fork and further in the forward direction than the clutch motor and/or the shift motor, the clutch motor being disposed further in the forward direction than the seat, the shift motor being disposed further in the forward direction than the seat.

A portion of the seat of the straddled vehicle near its front end has a narrowed width in the left-right direction, and is constricted. The main harness bundles electric cables connected to a rear indicator, a taillight, and the like, for example. Thus, the main harness runs from a vehicle front portion, passes through a constricted portion, and reaches a vehicle rear portion. In the straddled vehicle according to (4) above, the clutch motor (and/or the shift motor) is disposed further in the forward direction than the seat, and therefore the electric cable connected to the motor control unit does not pass through the constricted portion. The main harness, which passes through the constricted portion, can be thinned, so that a larger accommodation space can be obtained under the seat. Accordingly, this straddled vehicle can have the motor control unit with precautions against heat, and can shorten the electric cable connected to the motor control unit while achieving more effective use of a space.

(5) In the straddled vehicle according to any of (1) to (4) above, the motor control unit may be attached to the frame, which holds the main harness, such that a length of the electric cable from the motor control unit branch portion to the motor control unit is shorter than a length of the electric cable from the motor control unit branch portion to the clutch motor and/or the shift motor.

In the straddled vehicle according to (5) above, the distance between the motor control unit and the motor control unit branch portion is short, and consequently the motor control unit is disposed near the main harness. Thus, a section of the electric cable from an end portion of the electric cable, that is, the motor control unit branch portion, to the motor control unit is short. Accordingly, this straddled vehicle can have the motor control unit with precautions against heat, and can further shorten the electric cable connected to the motor control unit while achieving effective use of a space.

(6) In the straddled vehicle according to any of (1) to (5) above, the motor control unit may be attached to the frame, which holds the main harness, such that the motor control unit is entirely shifted to the left or right relative to the left-right center line in the left-right direction of the straddled vehicle.

In the straddled vehicle according to (6) above, the motor control unit is disposed so as to be entirely shifted to the left or right relative to the center in the left-right direction. Accordingly, this straddled vehicle can have the motor control unit with further improved precautions against heat, and also can shorten the electric cable connected to the motor control unit while achieving effective use of a space.

(7) In the straddled vehicle according to any of (1) to (6) above, the motor control unit may be attached to the frame, which holds the main harness, such that an area of the motor control unit in a side view of the straddled vehicle is larger than areas of the motor control unit in front and top views of the straddled vehicle.

In the straddled vehicle, various components such as an engine, a drive system, and the like, are disposed between the front fork and the clutch motor (and/or the shift motor). There is a demand for downsizing of the straddled vehicle, on the other hand. If, for example, the motor control unit is disposed with its largest surface facing in the up-down direction, the motor control unit largely protrudes from the frame. In this respect, the straddled vehicle according to (7) above has the motor control unit disposed in such a manner as to restrain the protrusion from the frame. Accordingly, this straddled vehicle can exert an effect of suppressing a size increase of the straddled vehicle in addition to the above-described effects.

(8) In the straddled vehicle according to any of (1) to (7) above, the frame may include a left frame and a right frame, the left frame being disposed to the left relative to the left-right center line, the right frame being disposed to the right relative to the left-right center line. The motor control unit may be attached to the left frame, which holds the main harness, such that: a distance in the left-right direction from the left-right center line to the motor control unit is longer than a distance in the left-right direction from the left-right center line to the motor control unit branch portion; and at least a part of the motor control unit is positioned further in the backward direction than the front fork and further in the forward direction than the clutch motor and/or the shift motor.

Generally, in a straddled vehicle, a brake lever and a pedal are provided in a right portion of the vehicle. Therefore, it is desirable that a hydraulic power unit for controlling a brake pressure is also provided in the right portion of the vehicle. In the straddled vehicle according to (8) above, the motor control unit is provided in a left portion of the vehicle. This consequently makes it possible that a space for arrangement of a hydraulic power unit is provided in a right portion of the vehicle. Accordingly, this straddled vehicle can exert an effect of making a brake system compact in addition to the above-described effects.

Explanations of configurations, terms, and the like, of the present invention will be given below.

The "straddled vehicle" is transport equipment, for example. The straddled vehicle is a vehicle driven by a human, for example. The straddled vehicle is a vehicle of a type in which a driver sits straddling a seat, for example. In the straddled vehicle, for example, the sitting driver has his/her left leg positioned to the left relative to the center in the left-right direction of the straddled vehicle, and his/her right leg positioned to the right relative to the center in the left-right direction of the straddled vehicle. The straddled vehicle is a motorcycle, for example. The straddled vehicle is not limited to the motorcycle, and may be a motor tricycle, for example. The straddled vehicle has two or three wheels, for example. The straddled vehicle has at least one front wheel and at least one rear wheel, for example. The type of the straddled vehicle is not particularly limited, and examples thereof include a moped type, an off-road type, and an on-road type. The straddled vehicle may have a cabin. The straddled vehicle is an engine vehicle that travels only with power generated by an engine, for example. The straddled vehicle may be a hybrid vehicle equipped with an engine and an electric motor, for example. The straddled vehicle may be an electric vehicle that travels only with power generated by an electric motor, for example.

The "frame" constitutes a framework of the straddled vehicle, for example. The frame is made of a metal-made pipe, for example. The frame includes at least the head tube and the main frame, for example. The main frame extends in the forward-backward direction of the straddled vehicle in a top view, for example. The main frame may extend obliquely or may be curved in the left-right direction, in the forward-backward direction, and in the up-down direction, respectively, for example. It is just required that, for example, the main frame entirely extends in the forward-backward direction in a top view. The main frame, for example, bifurcates left and right relative to the left-right center line in a top view, and extends backward. The left-right center line passes through the center of the upper end of the head tube in a top view, for example. The main frame supports a power source storage part, for example. The power source storage part is a fuel tank or a battery, for example.

The frame may include a down frame, which is disposed further in the downward direction than the main frame, for example. The down frame bifurcates left and right relative to the left-right center line in a top view, for example. The down frame extends backward and obliquely downward from the head tube, for example. The down frame includes an engine support portion for supporting the engine, for example.

The frame may include a support frame, which connects the main frame to the down frame, for example. The support frame is connected to the main frame at a location further in the forward direction than the clutch motor and/or the shift motor, for example. The support frame is connected to the down frame at a location closer to the head tube than the engine support portion, for example.

In a side view, the frame forms a motor control unit arrangement region, which is defined by the head tube, the main frame, the down frame, and the support frame, for example. The motor control unit is attached to the frame such that at least a part of the motor control unit is positioned in the motor control unit arrangement region in a side view, for example. The frame to which the motor control unit is attached is not particularly limited. The motor control unit is attached to at least one of the main frame, the down frame, or the support frame, for example.

The frame may include a seat frame for supporting the seat, the seat frame being disposed further in the backward direction than the main frame.

The "actuator mechanism" performs a gear shift operation based on a signal from the motor control unit, for example. The actuator mechanism constitutes an automatic transmission or a semi-automatic transmission, for example. The actuator mechanism may include both the clutch motor and the shift motor, for example. It may be acceptable that the actuator mechanism includes the clutch motor but does not include the shift motor, for example. It may be acceptable that the actuator mechanism does not include the clutch motor but includes the shift motor, for example. In short, the actuator mechanism includes at least either the clutch motor or the shift motor, for example.

The clutch motor performs a clutch operation, for example. The clutch motor connects and disconnects a clutch, for example. The clutch motor is disposed such that at least a part of the clutch motor is positioned further in the rightward direction than the left-right center line, for example. The shift motor performs a shift operation, for example. The shift motor selects a gear of the multi-stage transmission, for example. The shift motor is disposed such that at least a part of the shift motor is positioned further in the leftward direction than the left-right center line, for example. The clutch motor and the shift motor may each include a decelerator, for example. The actuator mechanism is attached to the engine, for example. The actuator mechanism may be provided in a crank case of the engine. The actuator mechanism may be attached to the frame, for example.

The "motor control unit" controls the actuator mechanism, for example. The motor control unit is directly connected to the clutch motor and/or the shift motor by the electric cable, for example. The motor control unit is connected to the clutch motor and/or the shift motor by the electric cable without interposition of any other control unit, for example. The other control unit is a device including a processor such as an electronic control unit (ECU), for example. The motor control unit may be connected to the clutch motor and/or the shift motor by the electric cable with interposition of a relay, for example. The motor control unit may be connected to the clutch motor and/or the shift motor by the electric cable with interposition of a relay connector, for example. The motor control unit is directly connected to the shift operator by the electric cable, for example. The motor control unit instructs the actuator mechanism to change the gear of the multi-stage transmission in response to a signal from the shift operator, for example. The motor control unit may be connected to an engine control unit for controlling the engine, a shift sensor, or the like, for example.

The motor control unit is disposed such that at least a part of the motor control unit is positioned further in the forward direction than the multi-stage transmission, for example. The motor control unit is disposed such that at least a part of the motor control unit is positioned further in the forward direction than the engine, for example. The motor control unit is disposed such that at least a part of the motor control unit is positioned further in the forward direction than a maximum width position at which the frame has the maximum width in the left-right direction, for example.

The motor control unit is disposed further in the backward direction than a movable range of the front fork, for example. The motor control unit is disposed such that at least a part of the motor control unit is positioned further in the backward direction than the head tube, for example. The motor control unit is disposed such that at least a part of the motor control unit is positioned further in the backward direction than the steering handle while the straddled vehicle is in the upright and non-steered state, for example. The motor control unit is disposed such that at least a part of the motor control unit is positioned further in the backward direction than the shift operator while the straddled vehicle is in the upright and non-steered state, for example. The motor control unit is disposed such that at least a part of the motor control unit is positioned further in the backward direction than the front end of the engine, for example.

The motor control unit is attached to the frame such that at least a part of the motor control unit is positioned further in the outward direction than the frame in the left-right direction, for example. The motor control unit is disposed such that at least a part of the motor control unit is positioned further in the outward direction than the motor control unit branch portion in the left-right direction, for example. The motor control unit is disposed such that at least a part of the motor control unit is positioned further in the rightward direction than the left end of the crank case of the engine, for example. The motor control unit is disposed such that at least a part of the motor control unit is positioned further in the rightward direction than the left end of a cylinder body of the engine, for example.

The motor control unit is disposed further in the downward direction than the movable range of the steering handle, for example. The motor control unit is disposed such that at least a part of the motor control unit is positioned further in the downward direction than the power source storage part, for example. The motor control unit is disposed such that at least a part of the motor control unit is positioned further in the downward direction than the upper end of the front fork, for example. The motor control unit is disposed such that at least a part of the motor control unit is positioned further in the downward direction than the upper end of the head tube, for example.

The motor control unit is disposed such that at least a part of the motor control unit is positioned further in the upward direction than a front wheel, for example. The motor control unit is disposed such that at least a part of the motor control unit is positioned further in the upward direction than the lower end of the front fork, for example. The motor control unit is disposed such that at least a part of the motor control unit is positioned further in the upward direction than the lower end of the head tube, for example. The motor control unit is disposed such that at least a part of the motor control unit is positioned further in the upward direction than the upper end of the engine, for example. The motor control unit is disposed such that at least a part of the motor control unit is positioned further in the upward direction than the engine support portion of the frame, for example. The engine support portion is a portion where the engine is attached to the frame, for example. The frame includes plural engine support portions, for example. The motor control unit is disposed such that at least a part of the motor control unit is positioned further in the upward direction than the uppermost one of the plural engine support portions, for example.

The motor control unit has a box-like shape, for example. The motor control unit has a substantially rectangular parallelepiped shape, for example. The motor control unit is disposed so as to lie along the frame, for example. The motor control unit is disposed such that its largest surface faces in the left-right direction, for example. The motor control unit is disposed such that at least a part of its largest surface is visually observable in a side view, for example. The motor control unit includes a connector to which the electric cable is connected, for example. The motor control unit is disposed such that the connector is visually observable in a top view, for example. The motor control unit is disposed such that the connector is visually observable in a front view, for example.

The motor control unit is accommodated in a holder, for example. The motor control unit is attached to the frame by the holder being fixed to the frame, for example. The motor control unit is disposed such that at least a part of the motor control unit is covered by a side cowl, for example. The motor control unit is disposed such that at least a part of its outer surface is covered by the side cowl in the left-right direction, for example. The motor control unit is disposed such that at least a part of its front surface is open to the outside in a front view, for example.

The "main harness" is configured as a bundle of plural electric cables. The plural electric cables include electric cables that are connected to various kinds of electrical equipment such as a lighting device and a control unit, for example. The main harness is thicker than the electric cables, for example. The main harness extends in the forward-backward direction of the straddled vehicle, for example. The main harness passes through the constricted portion of the straddled vehicle, for example. The constricted portion is located at the front end of the seat, for example. The main harness is provided inside the vehicle body, for example. The main harness is provided further in the inward direction than the frame, for example. The main harness may be held by the left frame, or may be held by the right frame, for example.

The "distance in the left-right direction from the left-right center line to the motor control unit" is identified as the shortest distance in the left-right direction from the left-right center line to the motor control unit, for example. The same is true for the distance in the left-right direction from the left-right center line to the motor control unit branch portion.

### Advantageous Effects of Invention

The present invention can provide a motor control unit with precautions against heat, and can shorten an electric cable connected to the motor control unit while achieving effective use of a space.

### Brief Description of Drawings

[FIG. 1] FIG. 1(A) is a left side view of a straddled vehicle according to an embodiment, and FIG. 1(B) is a top view schematically showing a vehicle body structure of the straddled vehicle according to the embodiment.
[FIG. 2] FIG. 2 is a right side view showing a vehicle body structure of the straddled vehicle according to the embodiment.
[FIG. 3] FIG. 3 is a left side view showing a vehicle body structure of the straddled vehicle according to the embodiment.
[FIG. 4] FIG. 4 is a front view showing a vehicle body structure of the straddled vehicle according to the embodiment.

### Description of Embodiments

In the following, a straddled vehicle according to an embodiment of the present invention will be described with reference to the drawings. The embodiment described below is just an example. The interpretation of the present invention should not be limited in any way by the embodiment described below. In the drawings, the reference signs F, B, U, D, L, and R indicate the forward (front), back (rear), up, down, left, and right, respectively.

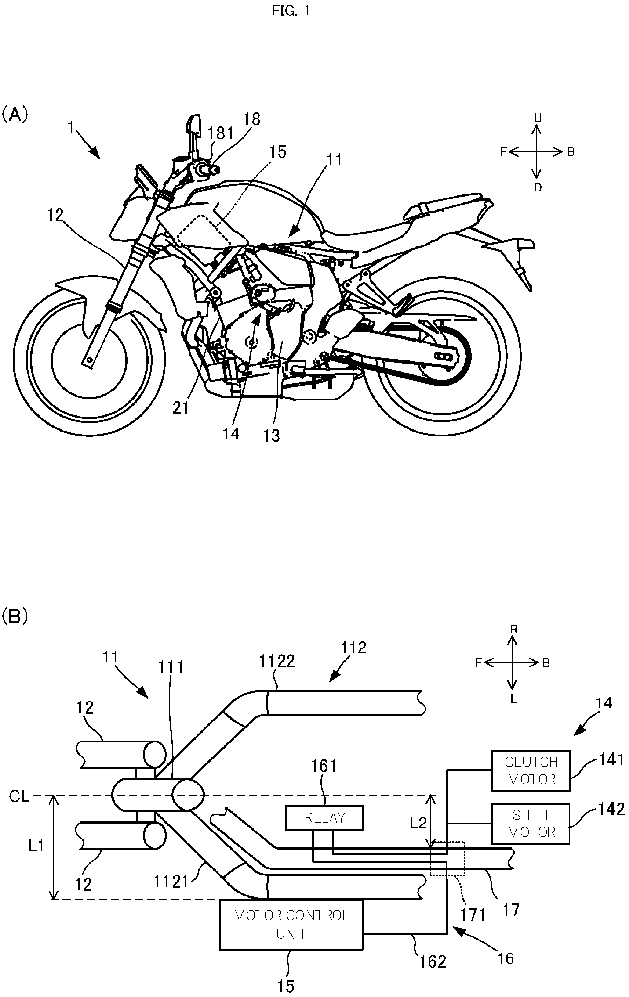

FIG. 1(A) is a left side view of a straddled vehicle according to the embodiment. A straddled vehicle 1 is a motorcycle. The straddled vehicle 1 includes a vehicle body 11, a front fork 12, a multi-stage transmission 13, an actuator mechanism 14, and a motor control unit 15.

FIG. 1(B) is a top view schematically showing a vehicle body structure of the straddled vehicle according to the embodiment. The vehicle body 11 includes a head tube 111 and a frame 112. The head tube 111 supports a steering handle in a steerable manner.

The frame 112 extends backward from the head tube 111 in a top view. The frame 112 is disposed so as to be shifted in a left-right direction relative to a left-right center line CL, which extends in a forward-backward direction while passing through the head tube 111. More specifically, the frame 112 includes a left frame 1121 and a right frame 1122, the left frame 1121 being disposed so as to be shifted to the left relative to the left-right center line CL, the right frame 1122 being disposed so as to be shifted to the right relative to the left-right center line CL.

The front fork 12 is supported by the head tube 111 via a bracket. The front fork 12 extends in an up-down direction. The front fork 12 supports a front wheel (not shown).

Referring to FIG. 1(A), the multi-stage transmission 13 includes plural gears having different gear ratios. The multi-stage transmission 13 transmits power of an engine 21 to a driving wheel via a gear selected by a driver. The driver manipulates a shift operator 181, which is provided to a steering handle 18, to select a gear of the multi-stage transmission 13. The actuator mechanism 14 changes a gear of the multi-stage transmission 13 in response to the driver's manipulation on the shift operator 181.

Referring to FIG. 1(B), the actuator mechanism 14 includes a clutch motor 141 and a shift motor 142. Both the clutch motor 141 and the shift motor 142 are disposed further in the backward direction than the head tube 111.

The motor control unit 15 controls the clutch motor 141 and the shift motor 142. The motor control unit 15 includes a processor such as a central processing unit (CPU). The processor reads and executes one or more programs recorded in a non-volatile memory, so that the motor control unit 15 performs various controls.

The straddled vehicle 1 further includes an electric cable 16 and a main harness 17. The electric cable 16 connects the motor control unit 15 to the clutch motor 141. The electric cable 16 connects the motor control unit 15 to the shift motor 142. In this embodiment, the electric cable 16 connects the motor control unit 15 to the clutch motor 141, and the motor control unit 15 to the shift motor 142, via a relay 161. The relay 161 is connected to a battery (not shown). The motor control unit 15, by controlling the relay 161, controls electricity to be supplied from the battery to the clutch motor 141 and the shift motor 142. The electric cable 16 may have a relay connector disposed between the motor control unit 15 and the clutch motor 141. The electric cable 16 may have a relay connector disposed between the motor control unit 15 and the shift motor 142.

The main harness 17 bundles an intermediate section of the electric cable 16 together with other electric cables. More specifically, the main harness 17 bundles an intermediate section of the electric cable 16 from the motor control unit 15 to the relay 161 and an intermediate section of the electric cable 16 from the relay 161 to the clutch motor 141 and the shift motor 142. The main harness 17 is held by the left frame 1121 with a holder such as a cable tie.

The motor control unit 15 is attached to the left frame 1121, which holds the main harness 17. The motor control unit 15 is disposed so as to be entirely shifted to the left relative to the left-right center line CL. Here, it may be acceptable that the motor control unit 15 is disposed so as to be partially shifted to the left relative to the left-right center line CL. The motor control unit 15 is disposed such that a distance L1 in the left-right direction from the left-right center line CL to the motor control unit 15 is longer than a distance L2 in the left-right direction from the left-right center line CL to a motor control unit branch portion 171. The motor control unit branch portion 171 is a portion where an end portion 162 of an electric cable connected to the motor control unit 15 branches from the main harness 17.

The length of an electric cable from the motor control unit branch portion 171 to the motor control unit 15 is shorter than the length of an electric cable from the motor control unit branch portion 171 to the clutch motor 141. Here, the length of the electric cable from the motor control unit branch portion 171 to the clutch motor 141 is the sum of the length of an electric cable from the motor control unit branch portion 171 to the relay 161 and the length of an electric cable from the relay 161 to the clutch motor 141. Here, it may be acceptable that the length of the electric cable from the motor control unit branch portion 171 to the motor control unit 15 is equal to or longer than the length of the electric cable from the motor control unit branch portion 171 to the clutch motor 141.

The length of the electric cable from the motor control unit branch portion 171 to the motor control unit 15 is shorter than the length of an electric cable from the motor control unit branch portion 171 to the shift motor 142. Here, the length of the electric cable from the motor control unit branch portion 171 to the shift motor 142 is the sum of the length of the electric cable from the motor control unit branch portion 171 to the relay 161 and the length of an electric cable from the relay 161 to the shift motor 142. Here, it may be acceptable that the length of the electric cable from the motor control unit branch portion 171 to the motor control unit 15 is equal to or longer than the length of the electric cable from the motor control unit branch portion 171 to the shift motor 142.

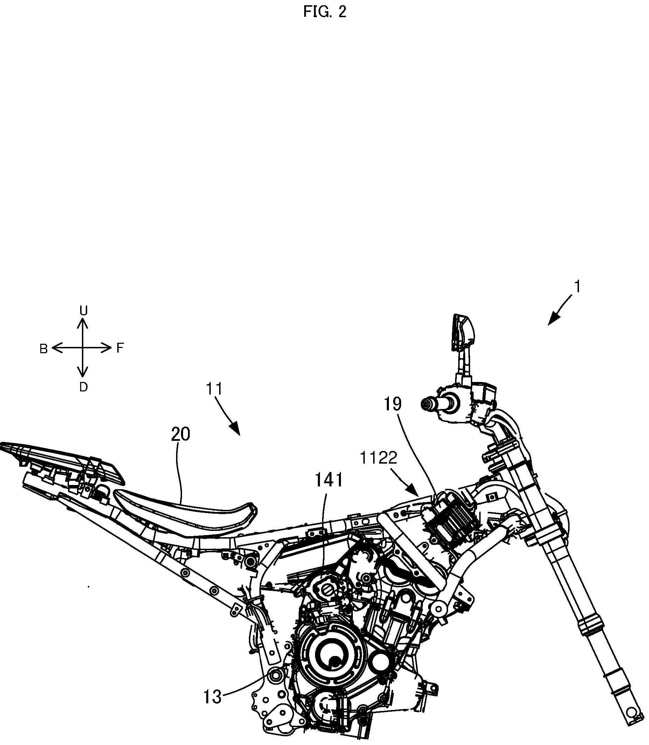

FIG. 2 is a right side view showing a vehicle body structure of the straddled vehicle according to the embodiment. The clutch motor 141 is disposed further in the upward direction than the multi-stage transmission 13. The clutch motor 141 is disposed such that at least a part of the clutch motor 141 is positioned further in the rightward direction than the left-right center line. The clutch motor 141 is disposed further in the forward direction than a seat 20, on which the driver sits. The straddled vehicle 1 further includes another control unit 19, which is attached to the right frame 1122. The other control unit 19 is, though not particularly limited, a group control unit or the like, for example.

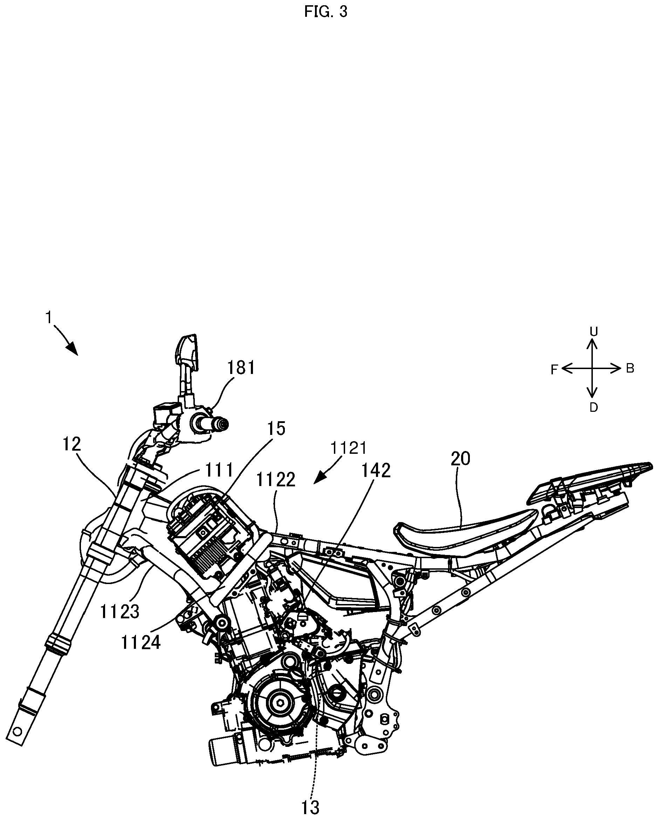

FIG. 3 is a left side view showing a vehicle body structure of the straddled vehicle according to the embodiment. The shift motor 142 is disposed further in the upward direction than the multi-stage transmission 13. The shift motor 142 is disposed such that at least a part of the shift motor 142 is positioned further in the leftward direction than the left-right center line. The shift motor 142 is disposed further in the forward direction than the seat 20. Here, it may be acceptable that the clutch motor 141 and the shift motor 142 are disposed such that at least a part of the clutch motor 141 and the shift motor 142 is positioned further in the forward direction than the seat 20. The motor control unit 15 is attached to the left frame 1121 such that at least a part of the motor control unit 15 is positioned further in the backward direction than the front fork 12 and further in the forward direction than the clutch motor 141 and the shift motor 142.

More specifically, the left frame 1121 includes a main frame 1122, a down frame 1123, and a support frame 1124. The motor control unit 15 is attached to the left frame 1121 such that at least a part of the motor control unit 15 is positioned in a motor control unit arrangement region, which is defined by the head tube 111, the main frame 1122, the down frame 1123, and the support frame 1124.

The motor control unit 15 is attached to the left frame 1121 such that at least a part of the motor control unit 15 is positioned further in the downward direction than the shift operator 181. The motor control unit 15 is attached to the left frame 1121 such that at least a part of the motor control unit 15 is positioned further in the upward direction than the clutch motor 141 and the shift motor 142. Here, it may be acceptable that the motor control unit 15 is attached to the left frame 1121 such that at least a part of the motor control unit 15 is positioned further in the downward direction than the clutch motor 141 and the shift motor 142.

The motor control unit 15 has a substantially rectangular parallelepiped shape. The motor control unit 15 is attached to the left frame 1121 such that the area of the motor control unit in a side view is larger than the areas of the motor control unit in the front and top views of the straddled vehicle.

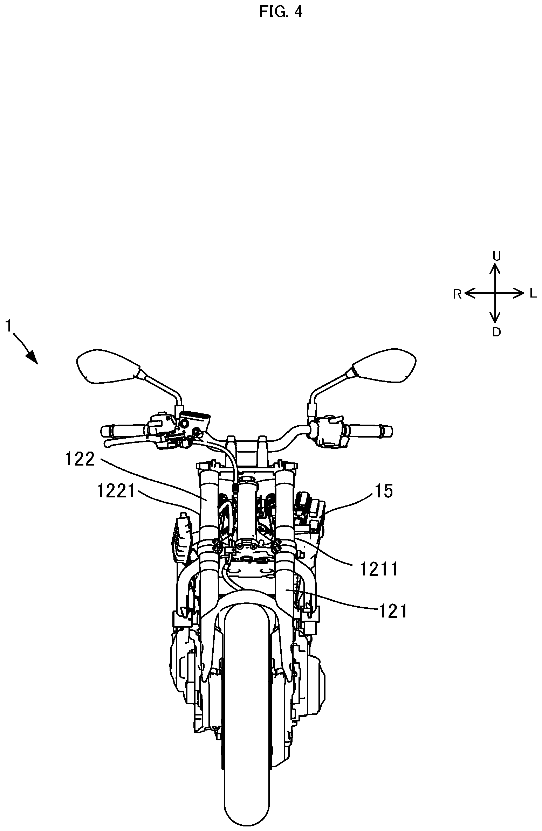

FIG. 4 is a front view showing a vehicle body structure of the straddled vehicle according to the embodiment. In the drawing, the straddled vehicle 1 is in an upright and non-steered state. The motor control unit 15 is attached to the left frame 1121 such that at least a part of the motor control unit 15 is positioned further in the leftward direction than a left edge 1211 of a left front fork 121 in the left-right direction. Here, it may be acceptable that the motor control unit 15 is attached to the right frame 1122 such that at least a part of the motor control unit 15 is positioned further in the rightward direction than a right edge 1221 of a right front fork 122 in the left-right direction.

### Reference Signs List

- 1: : straddled vehicle
- 11: : vehicle body
- 111: : head tube
- 112: : frame
- 1121: : left frame
- 1122: : right frame
- 12: : front fork
- 121: : left front fork
- 122: : right front fork
- 13: : multi-stage transmission
- 14: : actuator mechanism
- 141: : clutch motor
- 142: : shift motor
- 15: : motor control unit
- 16: : electric cable
- 161: : relay
- 162: : end portion of electric cable connected to motor control unit
- 17: : main harness
- 171: : motor control unit branch portion
- 18: : steering handle
- 181: : shift operator
- 19: : another control unit
- 20: : seat
- 21: : engine
- CL: : left-right center line
- L1: : distance in the left-right direction from the left-right center line to the motor control unit
- L2: : distance in the left-right direction from the left-right center line to the motor control unit branch portion

## Claims

1. A straddled vehicle (1) comprising:
a vehicle body (11) including a head tube (111) and a frame (112), the frame (112) extending backward from the head tube (111) in a top view, the frame (112) being disposed so as to be shifted in the left-right direction from a left-right center line (CL), the left-right center line (CL) extending in the forward-backward direction while passing through the head tube (111);
a front fork (12) supported by the head tube (111);
a multi-stage transmission (13) including plural gears;
an actuator mechanism (14) for changing a gear of the multi-stage transmission (13), the actuator mechanism (14) including a clutch motor (141) and/or a shift motor (142), the clutch motor (141) being disposed further in the backward direction than the head tube (111), the shift motor (142) being disposed further in the backward direction than the head tube (111);
a motor control unit (15) configured to control the clutch motor (141) and/or the shift motor (142);
an electric cable (16) connecting the motor control unit (15) to the clutch motor (141) and/or the shift motor (142); and
a main harness (17) bundling an intermediate section of the electric cable (16) together with another electric cable,
the motor control unit (15) being attached to the frame (112), which holds the main harness (17), such that
a distance in the left-right direction from the left-right center line (CL) to the motor control unit (15) is longer than a distance in the left-right direction from the left-right center line (CL) to a motor control unit branch portion (171), the motor control unit branch portion (171) being a portion where an end portion (162) of the electric cable (16) connected to the motor control unit (15) branches from the main harness (17), and
at least a part of the motor control unit (15) is positioned further in the backward direction than the front fork (12) and further in the forward direction than the clutch motor (141) and/or the shift motor (142).

2. The straddled vehicle (1) according to claim 1, further comprising:
a steering handle (18) supported by the head tube (111); and
a shift operator (181) capable of changing a gear of the multi-stage transmission (13), the shift operator (181) being provided to the steering handle (18), wherein
the motor control unit (15) is attached to the frame (112), which holds the main harness (17), such that at least a part of the motor control unit (15) is positioned further in the downward direction than the shift operator (181) and further in the upward direction than the clutch motor (141) and/or the shift motor (142).

3. The straddled vehicle (1) according to claim 1 or 2, comprising two front forks (121, 122) supported by the head tube (111), the two front forks (121, 122) being disposed to the left and right relative to the left-right center line (CL), wherein
the motor control unit (15) is attached to the frame (112), which holds the main harness (17), such that at least a part of the motor control unit (15) is positioned further in an outward direction than an outer edge of either one of the two front forks (121, 122) in the left-right direction while the straddled vehicle (1) is in an upright and non-steered state.

4. The straddled vehicle (1) according to any one of claims 1 to 3, further comprising a seat (20) on which a driver of the straddled vehicle (1) can be seated, the seat (20) being attached to the vehicle body (11), wherein
the motor control unit (15) is attached to the frame (112), which holds the main harness (17), such that at least a part of the motor control unit (15) is positioned further in the backward direction than the front fork (12) and further in the forward direction than the clutch motor (141) and/or the shift motor (142), the clutch motor (141) being disposed further in the forward direction than the seat (20), the shift motor (142) being disposed further in the forward direction than the seat (20).

5. The straddled vehicle (1) according to any one of claims 1 to 4, wherein
the motor control unit (15) is attached to the frame (112), which holds the main harness (17), such that a length of the electric cable (16) from the motor control unit branch portion (171) to the motor control unit (15) is shorter than a length of the electric cable (16) from the motor control unit branch portion (171) to the clutch motor (141) and/or the shift motor (142).

6. The straddled vehicle (1) according to any one of claims 1 to 5, wherein
the motor control unit (15) is attached to the frame (112), which holds the main harness (17), such that the motor control unit (15) is entirely shifted to the left or right relative to the left-right center line (CL) in the left-right direction of the straddled vehicle (1).

7. The straddled vehicle (1) according to any one of claims 1 to 6, wherein
the motor control unit (15) is attached to the frame (112), which holds the main harness (17), such that an area of the motor control unit (15) in a side view of the straddled vehicle (1) is larger than areas of the motor control unit (15) in front and top views of the straddled vehicle (1).

8. The straddled vehicle (1) according to any one of claims 1 to 7, wherein
the frame (112) includes a left frame (1121) and a right frame (1122), the left frame (1121) being disposed to the left relative to the left-right center line (CL), the right frame (1122) being disposed to the right relative to the left-right center line (CL), and
the motor control unit (15) is attached to the left frame (1121), which holds the main harness (17), such that:
a distance in the left-right direction from the left-right center line (CL) to the motor control unit (15) is longer than a distance in the left-right direction from the left-right center line (CL) to the motor control unit branch portion (171); and
at least a part of the motor control unit (15) is positioned further in the backward direction than the front fork (12) and further in the forward direction than the clutch motor (141) and/or the shift motor (142).

## Patentansprüche

1. Spreizsitz-Fahrzeug (1), das folgende Merkmale aufweist:
einen Fahrzeugkörper (11), der ein Steuerrohr (111) und einen Rahmen (112) aufweist, wobei sich der Rahmen (112) in einer Draufsicht von dem Steuerrohr (111) nach hinten erstreckt, wobei der Rahmen (112) so angeordnet ist, dass er von einer Links-Rechts-Mittellinie (CL) in der Links-Rechts-Richtung verschoben ist, wobei sich die Links-Rechts-Mittellinie (CL) in der Vorwärts-Rückwärts-Richtung erstreckt, während sie durch das Steuerrohr (111) verläuft;
eine Vordergabel (12), die von dem Steuerrohr (111) getragen wird;
ein Mehrstufengetriebe (13), das mehrere Gänge aufweist;
einen Betätigungsmechanismus (14) zum Wechseln eines Gangs des Mehrstufengetriebes (13), wobei der Betätigungsmechanismus (14) einen Kupplungsmotor (141) und/oder einen Schaltmotor (142) aufweist, wobei der Kupplungsmotor (141) weiter in der Rückwärtsrichtung als das Steuerrohr (111) angeordnet ist, wobei der Schaltmotor (142) weiter in der Rückwärtsrichtung als das Steuerrohr (111) angeordnet ist;
eine Motorsteuereinheit (15), die dazu ausgebildet ist, den Kupplungsmotor (141) und/oder den Schaltmotor (142) zu steuern;
ein elektrisches Kabel (16), das die Motorsteuereinheit (15) mit dem Kupplungsmotor (141) und/oder dem Schaltmotor (142) verbindet; und
einen Hauptkabelbaum (17), der einen Zwischenabschnitt des elektrischen Kabels (16) zusammen mit einem anderen elektrischen Kabel bündelt,
wobei die Motorsteuereinheit (15) an dem Rahmen (112) angebracht ist, der den Hauptkabelbaum (17) hält, derart, dass
ein Abstand in der Links-Rechts-Richtung von der Links-Rechts-Mittellinie (CL) zu der Motorsteuereinheit (15) länger ist als ein Abstand in der Links-Rechts-Richtung von der Links-Rechts-Mittellinie (CL) zu einem Motorsteuereinheit-Abzweigabschnitt (171), wobei der Motorsteuereinheit-Abzweigabschnitt (171) ein Abschnitt ist, an dem ein Endabschnitt (162) des elektrischen Kabels (16), das mit der Motorsteuereinheit (15) verbunden ist, von dem Hauptkabelbaum (17) abzweigt, und
zumindest ein Teil der Motorsteuereinheit (15) weiter in der Rückwärtsrichtung als die Vordergabel (12) und weiter in der Vorwärtsrichtung als der Kupplungsmotor (141) und/oder der Schaltmotor (142) positioniert ist.

2. Spreizsitz-Fahrzeug (1) gemäß Anspruch 1, das ferner folgende Merkmale aufweist:
einen Lenkgriff (18), der von dem Steuerrohr (111) getragen wird; und
einen Schaltbetätiger (181), der in der Lage ist, einen Gang des Mehrstufengetriebes (13) zu wechseln, wobei der Schaltbetätiger (181) an dem Lenkgriff (18) vorgesehen ist, wobei
die Motorsteuereinheit (15) an dem Rahmen (112) angebracht ist, der den Hauptkabelbaum (17) hält, derart, dass zumindest ein Teil der Motorsteuereinheit (15) weiter in der Abwärtsrichtung als der Schaltbetätiger (181) und weiter in der Aufwärtsrichtung als der Kupplungsmotor (141) und/oder der Schaltmotor (142) positioniert ist.

3. Spreizsitz-Fahrzeug (1) gemäß Anspruch 1 oder 2, das zwei Vordergabeln (121, 122) aufweist, die von dem Steuerrohr (111) getragen werden, wobei die zwei Vordergabeln (121, 122) relativ zu der Links-Rechts-Mittellinie (CL) links und rechts angeordnet sind, wobei
die Motorsteuereinheit (15) an dem Rahmen (112) angebracht ist, der den Hauptkabelbaum (17) hält, derart, dass zumindest ein Teil der Motorsteuereinheit (15) weiter in einer Auswärtsrichtung als eine Außenkante von einer der zwei Vordergabeln (121, 122) in der Links-Rechts-Richtung positioniert ist, während sich das Spreizsitz-Fahrzeug (1) in einem aufrechten und nicht gelenkten Zustand befindet.

4. Spreizsitz-Fahrzeug (1) gemäß einem der Ansprüche 1 bis 3, das ferner einen Sitz (20) aufweist, auf dem ein Fahrer des Spreizsitz-Fahrzeugs (1) sitzen kann, wobei der Sitz (20) an dem Fahrzeugkörper (11) angebracht ist, wobei
die Motorsteuereinheit (15) an dem Rahmen (112) angebracht ist, der den Hauptkabelbaum (17) hält, derart, dass zumindest ein Teil der Motorsteuereinheit (15) weiter in der Rückwärtsrichtung als die Vordergabel (12) und weiter in der Vorwärtsrichtung als der Kupplungsmotor (141) und/oder der Schaltmotor (142) positioniert ist, wobei der Kupplungsmotor (141) weiter in der Vorwärtsrichtung als der Sitz (20) angeordnet ist, wobei der Schaltmotor (142) weiter in der Vorwärtsrichtung als der Sitz (20) angeordnet ist.

5. Spreizsitz-Fahrzeug (1) gemäß einem der Ansprüche 1 bis 4, bei dem
die Motorsteuereinheit (15) an dem Rahmen (112) angebracht ist, der den Hauptkabelbaum (17) hält, derart, dass eine Länge des elektrischen Kabels (16) von dem Motorsteuereinheit-Abzweigabschnitt (171) zu der Motorsteuereinheit (15) kürzer ist als eine Länge des elektrischen Kabels (16) von dem Motorsteuereinheit-Abzweigabschnitt (171) zu dem Kupplungsmotor (141) und/oder dem Schaltmotor (142).

6. Spreizsitz-Fahrzeug (1) gemäß einem der Ansprüche 1 bis 5, bei dem
die Motorsteuereinheit (15) an dem Rahmen (112) angebracht ist, der den Hauptkabelbaum (17) hält, derart, dass die Motorsteuereinheit (15) relativ zu der Links-Rechts-Mittellinie (CL) in der Links-Rechts-Richtung des Spreizsitz-Fahrzeugs (1) vollständig nach links oder rechts verschoben ist.

7. Spreizsitz-Fahrzeug (1) gemäß einem der Ansprüche 1 bis 6, bei dem
die Motorsteuereinheit (15) an dem Rahmen (112) angebracht ist, der den Hauptkabelbaum (17) hält, derart, dass ein Bereich der Motorsteuereinheit (15) in einer Seitenansicht des Spreizsitz-Fahrzeugs (1) größer ist als Bereiche der Motorsteuereinheit (15) in einer Vorder- und einer Draufsicht des Spreizsitz-Fahrzeugs (1).

8. Spreizsitz-Fahrzeug (1) gemäß einem der Ansprüche 1 bis 7, bei dem
der Rahmen (112) einen linken Rahmen (1121) und einen rechten Rahmen (1122) aufweist, wobei der linke Rahmen (1121) relativ zu der Links-Rechts-Mittellinie (CL) links angeordnet ist, wobei der rechte Rahmen (1122) relativ zu der Links-Rechts-Mittellinie (CL) rechts angeordnet ist, und
die Motorsteuereinheit (15) an dem linken Rahmen (1121) angebracht ist, der den Hauptkabelbaum (17) hält, derart, dass:
ein Abstand in der Links-Rechts-Richtung von der Links-Rechts-Mittellinie (CL) zu der Motorsteuereinheit (15) länger ist als ein Abstand in der Links-Rechts-Richtung von der Links-Rechts-Mittellinie (CL) zu dem Motorsteuereinheit-Abzweigabschnitt (171); und
zumindest ein Teil der Motorsteuereinheit (15) weiter in der Rückwärtsrichtung als die Vordergabel (12) und weiter in der Vorwärtsrichtung als der Kupplungsmotor (141) und/oder der Schaltmotor (142) positioniert ist.

## Revendications

1. Véhicule (1) à enfourcher comprenant :
un corps (11) de véhicule incluant un tube de direction (111) et un cadre (112), le cadre (112) s'étendant vers l'arrière depuis le tube de direction (111) sur une vue de dessus, le cadre (112) étant disposé de manière à être déplacé dans la direction gauche-droite depuis une ligne médiane gauche-droite (CL), la ligne médiane gauche-droite (CL) s'étendant dans la direction vers l'avant-vers l'arrière tout en passant par le tube de direction (111) ;
une fourche avant (12) supportée par le tube de direction (111) ;
une transmission multi-étages (13) incluant plusieurs rapports ;
un mécanisme d'actionnement (14) pour changer un rapport de la transmission multi-étages (13), le mécanisme d'actionnement (14) incluant un moteur d'embrayage (141) et/ou un moteur de changement de vitesse (142), le moteur d'embrayage (141) étant disposé plus loin dans la direction vers l'arrière que le tube de direction (111), le moteur de changement de vitesse (142) étant disposé plus loin dans la direction vers l'arrière que le tube de direction (111) ;
une unité de commande (15) de moteur configurée pour commander le moteur d'embrayage (141) et/ou le moteur de changement de vitesse (142) ;
un câble électrique (16) reliant l'unité de commande (15) de moteur au moteur d'embrayage (141) et/ou au moteur de changement de vitesse (142) ; et
un faisceau principal (17) regroupant une section intermédiaire du câble électrique (16) avec un autre câble électrique,
l'unité de commande (15) de moteur étant attachée au cadre (112), qui retient le faisceau principal (17), de telle sorte que
une distance dans la direction gauche-droite depuis la ligne médiane gauche-droite (CL) vers l'unité de commande (15) de moteur est plus longue qu'une distance dans la direction gauche-droite depuis la ligne médiane gauche-droite (CL) vers une partie de bifurcation (171) d'unité de commande de moteur, la partie de bifurcation (171) d'unité de commande de moteur étant une partie où une partie d'extrémité (162) du câble électrique (16) reliée à l'unité de commande de moteur (15) bifurque depuis le faisceau principal (17), et
au moins une partie de l'unité de commande (15) de moteur est positionnée plus loin dans la direction vers l'arrière que la fourche avant (12) et plus loin dans la direction vers l'avant que le moteur d'embrayage (141) et/ou le moteur de changement de vitesse (142).

2. Véhicule (1) à enfourcher selon la revendication 1, comprenant en outre :
un guidon (18) supporté par le tube de direction (111) ; et
un opérateur de changement de vitesse (181) capable de changer un rapport de la transmission multi-étages (13), l'opérateur de changement de vitesse (181) étant disposé sur le guidon (18), dans lequel
l'unité de commande (15) de moteur est attachée au cadre (112), qui retient le faisceau principal (17), de telle sorte qu'au moins une partie de l'unité de commande (15) de moteur est positionnée plus loin dans la direction vers le bas que l'opérateur de changement de vitesse (181) et plus loin dans la direction vers le haut que le moteur d'embrayage (141) et/ou le moteur de changement de vitesse (142).

3. Véhicule (1) à enfourcher selon la revendication 1 ou 2, comprenant deux fourches avant (121, 122) supportées par le tube de direction (111), les deux fourches avant (121, 122) étant disposées vers la gauche et la droite par rapport à la ligne médiane gauche-droite (CL), dans lequel
l'unité de commande (15) de moteur est attachée au cadre (112), qui retient le faisceau principal (17), de telle sorte qu'au moins une partie de l'unité de commande (15) de moteur est positionnée plus loin dans une direction vers l'extérieur qu'un bord extérieur de l'une ou l'autre des deux fourches avant (121, 122) dans la direction gauche-droite tandis que le véhicule (1) à enfourcher est dans un état vertical et non dirigé.

4. Véhicule (1) à enfourcher selon l'une quelconque des revendications 1 à 3, comprenant en outre un siège (20) sur lequel un conducteur du véhicule (1) à enfourcher peut s'asseoir, le siège (20) étant attaché au corps (11) de véhicule, dans lequel
l'unité de commande (15) de moteur est attachée au cadre (112), qui retient le faisceau principal (17), de telle sorte qu'au moins une partie de l'unité de commande (15) de moteur est positionnée plus loin dans la direction vers l'arrière que la fourche avant (12) et plus loin dans la direction vers l'avant que le moteur d'embrayage (141) et/ou le moteur de changement de vitesse (142), le moteur d'embrayage (141) étant disposé plus loin dans la direction vers l'avant que le siège (20), le moteur d'embrayage (142) étant disposé plus loin dans la direction vers l'avant que le siège (20).

5. Véhicule (1) à enfourcher selon l'une quelconque des revendications 1 à 4, dans lequel
l'unité de commande (15) de moteur est attachée au cadre (112), qui retient le faisceau principal (17), de telle sorte qu'une longueur du câble électrique (16) depuis la partie de bifurcation (171) d'unité de commande de moteur jusqu'à l'unité de commande (15) de moteur est plus courte qu'une longueur du câble électrique (16) depuis la partie de bifurcation (171) d'unité de commande de moteur jusqu'au moteur d'embrayage (141) et/ou au moteur de changement de vitesse (142).

6. Véhicule (1) à enfourcher selon l'une quelconque des revendications 1 à 5, dans lequel
l'unité de commande (15) de moteur est attachée au cadre (112), qui retient le faisceau principal (17), de telle sorte que l'unité de commande (15) de moteur est entièrement déplacée vers la gauche ou la droite par rapport à la ligne médiane gauche-droite (CL) dans la direction gauche-droite du véhicule (1) à enfourcher.

7. Véhicule (1) à enfourcher selon l'une quelconque des revendications 1 à 6, dans lequel
l'unité de commande (15) de moteur est attachée au cadre (112), qui retient le faisceau principal (17), de telle sorte qu'une superficie de l'unité de commande (15) de moteur sur une vue de côté du véhicule (1) à enfourcher est supérieure à des superficies de l'unité de commande (15) de moteur sur des vue de face et de dessus du véhicule (1) à enfourcher.

8. Véhicule (1) à enfourcher selon l'une quelconque des revendications 1 à 7, dans lequel
le cadre (112) inclut un cadre gauche (1121) et un cadre droit (1122), le cadre gauche (1121) étant disposé vers la gauche par rapport à la ligne médiane gauche-droite (CL), le cadre droit (1122) étant disposé vers la droite par rapport à la ligne médiane gauche-droite (CL), et
l'unité de commande (15) de moteur est attachée au cadre gauche (1121), qui retient le faisceau principal (17), de telle sorte que :
une distance dans la direction gauche-droite depuis la ligne médiane gauche-droite (CL) vers l'unité de commande (15) de moteur est plus longue qu'une distance dans la direction gauche-droite depuis la ligne médiane gauche-droite (CL) vers la partie de bifurcation (171) d'unité de commande de moteur ; et
au moins une partie de l'unité de commande (15) de moteur est positionnée plus loin dans la direction vers l'arrière que la fourche avant (12) et plus loin dans la direction vers l'avant que le moteur d'embrayage (141) et/ou le moteur de changement de vitesse (142).
